(19) Europäisches Patentamt European Patent Office Office européen des brevets

(11) **EP 4 621 864 A1**

(12) **EUROPEAN PATENT APPLICATION**

(43) Date of publication:
24.09.2025 Bulletin 2025/39

(21) Application number: 25163437.4

(22) Date of filing: 13.03.2025

(51) International Patent Classification (IPC):
*H01M 4/13* (2010.01)    *H01M 10/058* (2010.01)

(52) Cooperative Patent Classification (CPC):
H01M 4/13; H01M 4/667; H01M 10/058;
H01M 50/586; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.03.2024 CN 202410315820

(71) Applicant: AESC Japan Ltd.
Yokohama-Shi, Kanagawa 220-0012 (JP)

(72) Inventor: ZHANG, Long
Pudong New Area Shanghai, 201315 (CN)

(74) Representative: Becker, Eberhard
Becker Kurig & Partner
Patentanwälte mbB
Bavariastraße 7
80336 München (DE)

(54) **ELECTRODE SHEET, BATTERY AND ELECTRONIC DEVICE**

(57) Disclosed are an electrode sheet (10), a battery (100), and an electronic device (1000). The electrode sheet includes a current collector (11), an electrode tab, an active substance layer, and an active material layer. The current collector has a first surface and second surface opposite to each other. The electrode tab protrudes from the current collector. The active substance layer is disposed on the first surface and the second surface. The active material layer at least partially overlaps with or has a gap from one end of the active substance layer near the electrode tab. The active material layer includes a first active material layer (14) disposed on the first surface and a second active material layer (15) disposed on the second surface; wherein colors of the first active material layer and the second active material layer are different.

FIG. 4

EP 4 621 864 A1

**Description**

BACKGROUND

Field of the Disclosure

The present disclosure relates to the field of battery production technology, specifically to an electrode sheet, a battery, and an electronic device.

Description of Related Art

Power batteries, due to their advantages of high energy density, rechargeable capability, safety, and environmental friendliness, are widely utilized in various sectors, including but not limited to new energy vehicles, consumer electronics, and energy storage systems.

As the continuous development of power batteries progresses, demands for battery performance have become increasingly stringent, leading to the emergence of batteries with diverse systems and structures. To meet the design requirements of various battery types, the positive and negative sides of electrode sheets may exhibit differences in aspects such as the coating weight, coating thickness, and coating area of active substances. However, due to the fact that the active substance layers on both sides of conventional electrode sheets are typically black, common insulation layers are white on both sides, and current collectors are metallic in color on both sides, the colors of the positive and negative sides are identical. This uniformity precludes effective machine identification and differentiation between the positive and negative sides of the electrode sheets, potentially resulting in the misplacement of sheets during assembly. Such errors are likely to lead to capacity loss, lithium plating, and other battery failure issues.

Therefore, there is an urgent need to provide an electrode sheet, a battery, and an electronic device to solve the above-mentioned problems.

SUMMARY OF THE DISCLOSURE

Given the drawbacks of the existing technology mentioned above, the present disclosure provides an electrode sheet, a battery, and an electronic device to improve the issue of ineffective distinction between the positive and negative sides of the electrode sheet.

To achieve the above-mentioned purpose and other related objectives, the present disclosure provides an electrode sheet, which includes a current collector, an electrode tab, an active substance layer, and an active material layer. The current collector has a first surface and a second surface opposite to each other. The electrode tab protrudes from the current collector. The active substance layer is disposed on the first surface and the second surface of the current collector. The active material layer at least partially overlaps with or has a gap from one end of the active substance layer near the electrode tab. The active material layer includes a first active material layer disposed on the first surface and a second active material layer disposed on the second surface, where the colors of the first active material layer and the second active material layer are different.

In an embodiment of the present disclosure, the distance between the active material layer and one end of the active substance layer is h, where the value of h ranges from 0mm to 1mm.

In an embodiment of the present disclosure, the different colors of the first active material layer and the second active material layer facilitate visual identification of proper installation orientation of the electrode sheet.

In an embodiment of the present disclosure, the active material layer covers a part of the current collector and/or the electrode tab.

In an embodiment of the present disclosure, the first active material layer includes: a ceramic filler, an adhesive, and a color developer, where the color developer is an inorganic material.

In an embodiment of the present disclosure, in the first active material layer, the mass content of the color developer is 2% to 20%, the mass content of the adhesive is 8% to 40%, and the mass content of the ceramic filler is 55% to 88%.

In an embodiment of the present disclosure, in the first active material layer, the mass content of the color developer is 2.5% to 10%, and the mass content of the adhesive is 10% to 35%.

In an embodiment of the present disclosure, the color developer includes at least one of titanium chrome brown, titanium nickel yellow, bismuth vanadate, chromium oxide green, cobalt green, cobalt blue, iron blue, cadmium red, cadmium yellow, lithopone, carbon black, iron oxide red, and iron oxide yellow.

In an embodiment of the present disclosure, the adhesive includes at least one of polyvinylidene fluoride, polyimide, polyphenylene sulfide, polyarylsulfone, polychloroether, polyacrylonitrile, polyvinyl alcohol, ethylene-acrylic acid copolymer, ethylene-vinyl acetate copolymer, ethylene-ethyl acrylate copolymer, and polyacrylic acid.

In an embodiment of the present disclosure, the ceramic filler includes at least one of aluminum oxide, boehmite, titanium dioxide, zirconium dioxide, zinc oxide, barium sulfate, boron nitride, aluminum nitride, and magnesium nitride.

In an embodiment of the present disclosure, the color developer includes at least one of titanium chrome brown, titanium nickel yellow, bismuth vanadate, chromium oxide green, cobalt green, and cobalt blue.

In an embodiment of the present disclosure, the adhesive includes at least one of polyvinylidene fluoride, polyimide, polyacrylonitrile, ethylene-acrylic acid copolymer, ethylene-vinyl acetate copolymer, and polyacrylic acid.

In an embodiment of the present disclosure, the ceramic filler includes at least one of aluminum oxide, boehmite, titanium dioxide, and barium sulfate.

In an embodiment of the present disclosure, the average particle size of the color developer is $d_1$, the average particle size of the ceramic filler is $d_2$, and $d_1$ and $d_2$ satisfy:

$$0.25 \leq d_1/d_2 \leq 6.$$

In an embodiment of the present disclosure, $d_1$ and $d_2$ satisfy: $0.8 \leq d_1/d_2 \leq 4$.

In an embodiment of the present disclosure, the chromaticity of the color developer in the standard electrolyte is 0 to 20 degrees; wherein the standard electrolyte includes an organic solvent and lithium salt. The organic solvent includes ethyl propyl carbonate, ethyl methyl carbonate, ethylene carbonate, propylene carbonate, and fluoroethylene carbonate with a volume ratio of 40:20:25:5:10. The lithium salt is a mixed lithium salt of lithium hexafluorophosphate and lithium difluoro(oxalato)borate with a mass ratio of 97:3, and the concentration of lithium salt in the electrolyte is 1mol/L.

In an embodiment of the present disclosure, the electrode sheet is a positive electrode sheet.

Another aspect of the present disclosure provides a battery. The battery includes an electrode assembly. The electrode assembly includes a positive electrode sheet, a negative electrode sheet, and a separator disposed between the positive electrode sheet and the negative electrode sheet. At least one of the positive electrode sheet and the negative electrode sheet adopts the electrode sheet described above.

In an embodiment of the present disclosure, the battery further includes a housing, an electrode terminal, and a cover plate. One side of the housing has an opening to accommodate the electrode assembly. The housing includes an end wall and a sidewall surrounding the end wall. The electrode terminal passes through the end wall. The cover plate covers the opening.

In an embodiment of the present disclosure, the battery is a cylindrical battery.

The present disclosure further provides an electronic device. The electronic device includes the battery described above, and the battery is adopted for the electronic device.

The electrode sheet of the present disclosure has active material layers of different colors disposed on the active substance layers on both the front and back sides near one end of the electrode tab. By observing the color of the active material layers, the front and back sides of the electrode sheet may be effectively distinguished, preventing the situation where the front and back sides of the electrode sheet are reversed. Moreover, the active material layers do not participate in chemical reactions. Identifying the front and back sides of the electrode sheet through the active material layers does not require additional markings, thus having minimal impact on the battery.

At least one of the active material layers on both the front and back sides of the electrode sheet is added with an inorganic material as a color developer, which has strong compatibility and high stability. It is possible to make the active material layers on both the front and back sides present different colors while maintaining chemical stability, not dissolving in the electrolyte, thereby not affecting the battery performance.

BRIEF DESCRIPTION OF THE DRAWINGS

To more clearly explain the technical solutions in the embodiments of the present disclosure or in the related art, a brief introduction will be given below to the drawings that need to be used in the description of the embodiments or the related art. Clearly, the drawings described below are only some embodiments of the present disclosure. For those skilled in the art, other drawings may be obtained based on these drawings without creative effort.

FIG. 1 is a schematic structural diagram of an electronic device in an embodiment of the present disclosure.
FIG. 2 is a schematic structural diagram of a battery in an embodiment of the present disclosure.
FIG. 3 is a schematic structural diagram of an electrode assembly in an embodiment of the battery of the present disclosure.
FIG. 4 is a schematic structural diagram of an electrode sheet in an embodiment of the present disclosure.

DESCRIPTION OF EMBODIMENTS

The following specific examples illustrate the implementation of the present disclosure. Those skilled in the art may easily understand other advantages and effects of the present disclosure from the content disclosed in this specification. The present disclosure may also be implemented or applied through other different specific embodiments, and various details in this specification may also be modified or changed based on different perspectives and applications without departing from the spirit of the present disclosure. It should be noted that, in the absence of conflict, the features in the following embodiments and examples may be combined with each other.

Unless otherwise defined, all technical and scientific terms used herein have the same meaning as commonly understood by those skilled in the art to which the present disclosure belongs. The terms used in the specification of the present disclosure are only for the purpose of describing specific embodiments and are not intended to limit the present disclosure.

In the present application, technical terms such as "first", "second", etc. are only used to distinguish different objects and should not be understood as indicating or implying relative importance or implicitly specifying the number, specific order, or primary to secondary relationship of the technical features indicated.

In the present application, terms such as "multiple", "various", "several times", etc., unless specifically limited, refer to a quantity greater than or equal to 2. For example, "one or more" means one or greater than or equal to two.

In the present application, "preferred", "better", "more preferable" are only used to describe embodiments or examples with better effects, and should be understood as not constituting a limitation on the scope of protection of the present disclosure. If "preferred" appears in multiple places in a technical solution, unless otherwise specified and without contradictions or mutually restrictive relationships, each "preferred" embodiment is independent of the others.

In the present application, "further", "even further", "especially", etc. are used for descriptive purposes to indicate differences in content, but should not be understood as limitations to the scope to be protected by the present disclosure.

In the present application, regarding numerical ranges, unless otherwise specified, the distribution of selectable values within the numerical range is considered continuous and includes the two numerical endpoints of the range (i.e., the minimum and maximum values), as well as every value between these two numerical endpoints. When multiple numerical ranges are provided to describe features or characteristics, these numerical ranges may be combined together.

In the present application, unless otherwise specified, "%" and "wt%" both represent mass percentage.

The electronic device involved in the embodiments of the present application is a device powered by a battery. Such electronic device may be a mobile phone, a portable device, a laptop computer, an electric bicycle, an electric vehicle, a ship, a spacecraft, an electric toy, and an electric tool, etc. Specifically, the spacecraft may include airplanes, rockets, space shuttles, and spaceships, etc. Electric toys may include stationary or mobile electric toys, specifically such as game consoles, electric car toys, electric ship toys, and electric airplane toys, etc. Electric tools may include metal cutting electric tools, grinding electric tools, assembly electric tools, and railway electric tools, specifically such as electric drills, electric grinders, electric wrenches, electric screwdrivers, electric hammers, impact drills, concrete vibrators, and electric planers.

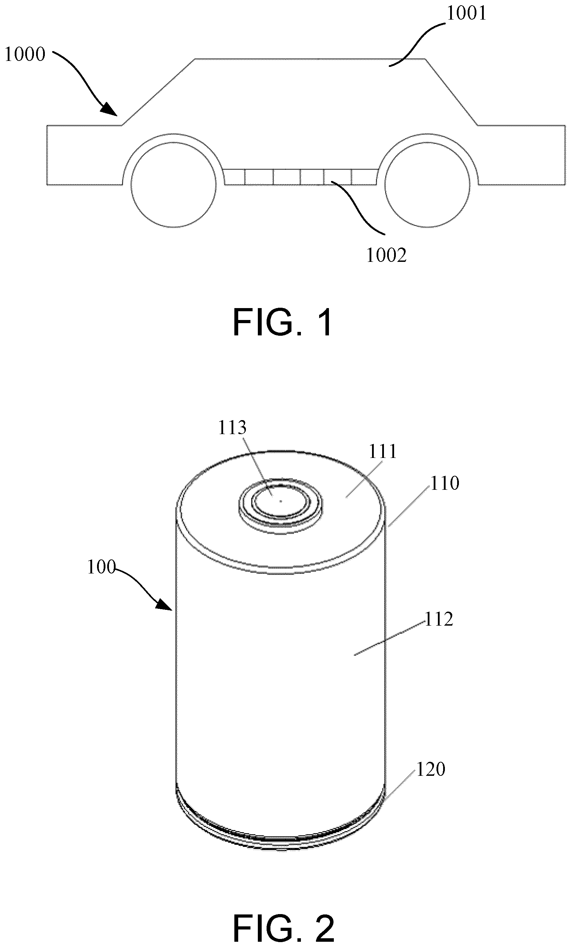

Please refer to FIG. 1, the above-mentioned electronic device 1000 includes a work part 1001 and a power system 1002, where the work part 1001 is electrically connected to the power system 1002 to obtain power support. The work part 1001 is a unit component that may obtain electrical energy from the power system 1002 and perform corresponding work, such as the fan blade rotation unit of a fan, or the dust suction work unit of a vacuum cleaner. The power system 1002 provides power support for the operation of the work part 1001. The power system 1002 includes a casing and at least one battery 100 disposed in the casing. That is, one battery 100 or multiple batteries 100 may be disposed in the casing. If multiple batteries 100 are disposed in the casing, these multiple batteries 100 may be connected in series, parallel, or in both ways. The connection in both ways means that the multiple batteries 100 are connected in series and parallel at the same time. Multiple batteries 100 may be directly connected in series, parallel, or in both ways, and then the whole assembly of multiple batteries 100 is accommodated in the casing. Alternatively, multiple batteries 100 may first be connected in series, parallel, or combined to form battery modules, and then multiple battery modules are connected in series, parallel, or combined to form a whole, which is then accommodated in the casing. The casing serves as protection for the batteries inside. It should be noted that in addition to the battery 100, the power system 1002 may further include parts such as a thermal management system, a circuit board, etc., which will not be elaborated here.

Please refer to FIG. 1, in an embodiment, the electronic device 1000 is a vehicle. This vehicle may be a gasoline vehicle, a gas vehicle, or a new energy vehicle. The new energy vehicle may be a pure electric vehicle, a hybrid vehicle, or a range-extended vehicle, etc., but is not limited to these. The work part 1001 of the vehicle is the vehicle body. The power system 1002 may be disposed at the bottom, front, or rear of the vehicle body and provides power support for the operation of the vehicle or the operation of electrical components inside the vehicle.

To meet different power requirements, the power system 1002 may include multiple batteries 100, which may be connected in series, parallel, or in both ways. In this embodiment, multiple batteries 100 may be directly formed into a battery pack, or they may first be formed into battery modules, and then the battery modules are formed into a battery pack.

The battery referred to in the embodiments of the present disclosure is the minimum unit that makes up a battery module or a battery pack. This battery may be a prismatic battery, a pouch battery, or a cylindrical battery. The present disclosure adopts a cylindrical battery as an example to describe the battery structure in detail.

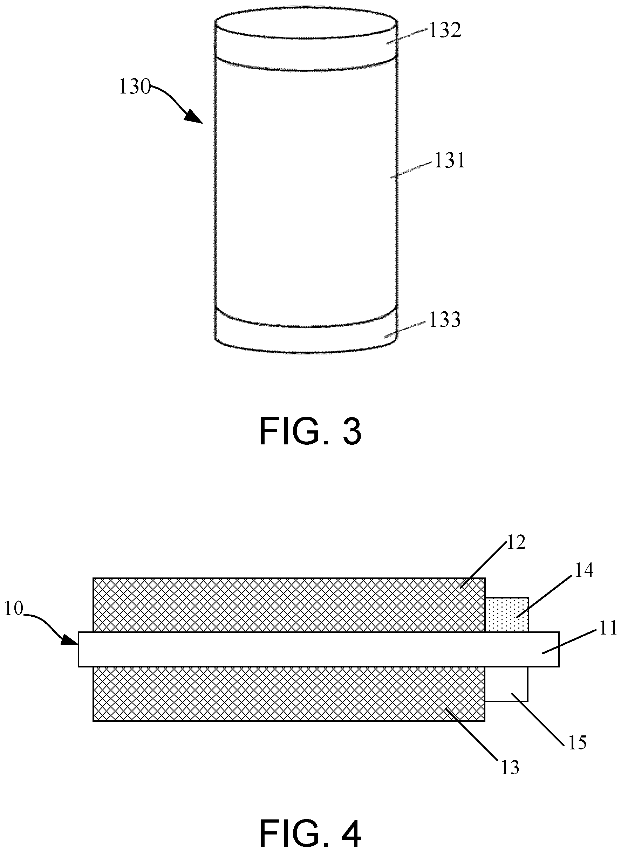

Please refer to FIG. 2 and FIG. 3, the battery 100 includes a housing 110, a cover plate 120, and an electrode assembly 130.

The interior of the housing 110 forms an internal space for accommodating the electrode assembly 130. The housing may be in various shapes, for example, cuboid, cylindrical, hexagonal prism, etc. Specifically, the shape of the housing 110 may be determined according to the shape and size of the electrode assembly 130. For example, if the electrode assembly 130 is a cylindrical structure, then a cylindrical housing may be selected for the housing 110; if the electrode assembly 130 is a cuboid structure, then a cuboid structure may be selected for the housing 110, and so on. The material of the housing 110 may be selected from materials with certain hardness and strength, for example, steel. In other embodiments, the material of the housing 110 may also be selected from copper, iron, aluminum, aluminum alloy, plastic, etc. The embodiments of the present disclosure do not impose special limitations on this aspect.

Please refer to FIG. 2, in an embodiment, the housing 110 includes an end wall 111 and a sidewall 112 surrounding the end wall 111. The sidewall 112 and the end wall 111 together form a cylinder that is closed at one end and open at the other end. The cover plate 120 seals the open end of the cylinder to isolate the internal environment of the battery from the external environment. An electrode terminal 113 connected to the electrode assembly 130 is disposed on the end wall 111. The shape of the cover plate 120 may be adapted to the shape of the housing 110. Optionally, the cover plate 120 may be made of a material with specific hardness and strength (such as aluminum alloy), so that the cover plate 120 is less likely to deform when subjected to compression and impact, allowing the battery to have higher structural strength and improved safety performance. The material of the cover plate 120 may also be various, such as copper, iron, aluminum, stainless steel, aluminum alloy, plastic, etc. The present disclosure does not impose special limitations on this aspect. In some embodiments, an insulation member may also be disposed on the inner side of the cover plate 120. The insulation member may be used to isolate the electrically connected components inside the housing 110 from the cover plate, so as to reduce the risk of short circuits. For example, the insulation member may be plastic, rubber, etc.

Please refer to FIG. 2 and FIG. 3, the electrode assembly 130 is the component where electrochemical reactions occur in the battery 100. The housing 110 may contain one or more electrode assemblies 130. The electrode assembly 130 is formed by winding or stacking electrode sheets (positive electrode sheet and negative electrode sheet). Moreover, a separator is normally disposed between the positive electrode sheet and the negative electrode sheet to separate the positive electrode sheet from the negative electrode sheet, preventing internal short circuits in the battery while allowing active ions to pass through the separator and move between the positive and negative electrodes.

Please refer to FIG. 3 and FIG. 4, the electrode sheet 10 typically includes a current collector 11 and an active substance layer disposed on the current collector 11. The parts of the positive electrode sheet and the negative electrode sheet with the active substance layer constitute the main body 131 of the electrode assembly 130, while the parts of the positive electrode sheet and the negative electrode sheet without the active substance each constitute electrode tabs, referred to as the first electrode tab 132 and the second electrode tab 133, respectively. The first electrode tab 132 and the second electrode tab 133 may be located together at one end of the main body 131 or separately at both ends of the main body 131. In this embodiment, the first electrode tab 132 and the second electrode tab 133 are located at both ends of the main body 131, with the first electrode tab 132 electrically connected to the electrode terminal 113, and the second electrode tab 133 directly or indirectly electrically connected to the housing 110.

The current collector 11 may be selected from metal foil sheets or composite current collectors. Specifically, the selection of the current collector 11 is related to the type of electrode sheet. For example, when the electrode sheet 10 is a positive electrode sheet, the current collector 11 may adopt aluminum foil with a thickness of $5\mu m$ to $20\mu m$, further, the thickness of the aluminum foil is $10\mu m$ to $15\mu m$, and even further, the thickness of the aluminum foil is $12\mu m$. The current collector 11 may also be selected as a composite current collector, which uses a high polymer resin material as the middle layer, with aluminum layers deposited on the upper and lower surfaces of the middle layer. The high polymer resin material may be selected from polyethylene terephthalate (PET), polypropylene (PP), polyimide (PI), polystyrene (PS), polyamide (PA), etc. When the electrode sheet 10 is a negative electrode sheet, the current collector 11 may be copper foil with a thickness of $4\mu m$ to $15\mu m$, further, the thickness of the copper foil is $5\mu m$ to $10\mu m$, and even further, the thickness of the copper foil is $8\mu m$. The current collector 11 may also be a composite current collector, which uses a high polymer resin material as the middle layer, with copper deposited on the upper and lower surfaces of the middle layer. The high polymer resin material may be selected from polyethylene terephthalate (PET), polypropylene (PP), polyimide (PI), polystyrene (PS), polyamide (PA), etc.

The current collector 11 has a first surface and a second surface opposite to each other along the thickness direction of the current collector 11, and the active substance layer may be disposed on at least one of the first surface and the second surface. Further, the active substance layers is disposed on both the first surface and the second surface. For ease of description, the present disclosure refers to the active substance layer disposed on the first surface as the first active substance layer 12, and the active substance layer disposed on the second surface as the second active substance layer 13. The active substance layer includes an active material, a conductive agent, and a binder, wherein the active material is the main substance participating in electrochemical reactions, and the selection of the material is related to the electrode sheet and battery type. Taking lithium-ion batteries as an example, when the electrode sheet 10 is a positive electrode sheet, the active material may be selected from lithium phosphates, lithium transition metal oxides, and their respective modifications. The lithium phosphates include but are not limited to lithium iron phosphate, lithium manganese iron phosphate, lithium manganese phosphate, etc. The lithium transition metal oxides include but are not limited to lithium nickel cobalt manganese oxide, lithium nickel cobalt oxide, lithium manganese cobalt oxide, lithium nickel cobalt aluminum oxide, lithium manganese oxide, etc. The present disclosure is not limited to these materials, and other conventional materials that may be used as battery positive electrode active materials may also be used. These positive electrode active materials may be used alone or in combination of two or more of the above. When the electrode sheet 10 is a negative electrode sheet, the active material may be selected from carbon materials and/or silicon materials. Carbon materials, for example, may be selected from artificial graphite, natural graphite, soft carbon, hard carbon, mesophase carbon microspheres, etc. Silicon materials, for example, may be selected from one or more of silicon, silicon oxide compounds, and silicon carbide compounds. However, the present disclosure is not limited to these materials, and other conventional materials that may be used as battery negative electrode active materials may also be used. These negative electrode active materials may be used alone or in combination of two or more of the above.

The conductive agent may improve electronic conductivity. To ensure good charge and discharge performance of the battery, the conductive agent acts to collect micro-currents between the active materials and between the active material and the current collector, thereby reducing the contact resistance of the battery and accelerating the movement rate of electrons. Additionally, the conductive agent may also improve the processability of the electrode, promote the wetting of the electrode by the electrolyte, and effectively increase the migration rate of lithium ions in battery materials, thus improving the charge and discharge efficiency and service life of the battery. In some embodiments, the conductive agent includes but is not limited to at least one of conductive carbon black (SP), conductive graphite, carbon fiber, carbon nanotubes, and graphene. Optionally, the conductive agent may be conductive carbon black; or a combination of carbon fiber and conductive carbon black; or a combination of carbon nanotubes and graphene, etc.

The binder is used to bind the active material and the conductive agent, and to provide an adhesive force to some extent for the active substance layer, allowing the active substance layer to be adhered to the current collector 11. As an example, the negative electrode binder is selected from at least one of polyacrylic acid (PAA), polyvinylidene fluoride (PVDF), styrene-butadiene rubber (SBR), carboxymethyl cellulose (CMC). For instance, the binder is polyvinylidene fluoride, or a combination of styrene-butadiene rubber and carboxymethyl cellulose, etc. The positive electrode binder is selected from one or a mixture of multiple of polyvinylidene fluoride (PVDF), polyvinylidene fluoride-hexafluoropropylene, polytetrafluoroethylene, sodium carboxymethyl cellulose, and styrene-butadiene rubber.

With the continuous development of new energy technologies, the application of batteries is becoming increasingly widespread, and battery types are becoming more diverse. To adapt to the development of different battery types, the design of electrode sheets may vary. For example, in cylindrical batteries, in pursuit of energy density, the diameter of the cylindrical electrode assembly and the inner diameter of the housing are relatively similar, with a small gap between them. Due to the inconsistent curvature of the inner and outer diameters of cylindrical batteries, the design of electrode sheets with different surface densities on the positive and negative sides may significantly improve their energy density. Therefore, it is particularly important to separate the positive and negative sides of the positive electrode sheets in cylindrical batteries.

However, the material composition of the first active substance layer 11 and the second active substance layer 12 is the same, presenting the same color, making it impossible to effectively separate the positive and negative sides of the electrode sheet 10. To solve this problem, markings are normally made manually with a marker pen in the non to active substance layer area. Although this method may separate the positive and negative sides of the electrode sheet, it is not fool-proof and has low efficiency, making it unsuitable for mass production.

Based on this, the present disclosure provides an electrode sheet. By setting active material layers of different colors on the first surface and the second surface of the current collector, the positive and negative sides of the electrode sheet may be effectively separated through observing the color of the active material layer. Moreover, the active material layer is disposed at one end of the active substance layer near the electrode terminal, which does not participate in chemical reactions and has little impact on the battery.

Please refer to FIG. 4, the above-mentioned electrode sheet 10 includes a current collector 11, an electrode terminal, an active substance layer and an active material layer. The active substance layer is disposed on the first surface and the second surface of the current collector 11, the electrode tab protrudes from the current collector 11, the electrode tab may be formed by die-cutting the uncoated area of the current collector 11, or the electrode tab may be formed independent of the current collector 11 and then welded to the current collector 11. The active material layer is disposed at one end of the active substance layer near the electrode tab, and may at least partially overlap with one end of the active substance layer near the electrode tab, or may be set at intervals with the active substance layer. It should be noted that when the active material layer is disposed at intervals with the active substance layer, the distance between the active material layer and one end of the active substance layer is h, the value of h is 0mm to 1mm. In actual production, the value of h is 0.5mm. When h=0, it indicates that the active material layer is disposed adjacent to the active substance layer or the active material layer overlaps with the active substance layer, that is, one end of the active material layer near the active substance layer covers the surface of the active substance layer, and the other end of the active material layer contacts the current collector.

The active material layer of the present disclosure includes a first active material layer 14 disposed on the first surface and a second active material layer 15 disposed on the second surface. Moreover, the different colors of the first active material layer 14 and the second active material layer 15 facilitate visual identification of proper installation orientation of the electrode sheet 10. More specifically, the colors presented by the first active material layer 14 and the second active material layer 15 are different, allowing the positive and negative sides of the electrode sheet 10 to be distinguished by observing the colors of the first active material layer 14 and the second active material layer 15. Furthermore, the active material layer does not participate in chemical reactions, making it a good choice for distinguishing the positive and negative sides of the electrode sheet without the need to add additional markings, and the method has little impact on the battery.

In an embodiment, the first active material layer 14 includes a ceramic filler, an adhesive and a color developer, wherein the color developer is an inorganic material. Since the organic color developer is generally an electrode substance, the organic color developer may have similar solubility with the electrode organic solvent in the battery electrolyte, thus causing side reactions with the electrolyte and leading to battery capacity decay. Inorganic materials, on the other hand, have stable chemical properties. In the present disclosure, the use of the inorganic material as the color developer may present color while not reacting chemically with the electrolyte, thereby avoiding adverse effects on battery performance.

In some embodiments, the color developer includes but is not limited to at least one of titanium chrome brown, titanium nickel yellow, bismuth vanadate, chromium oxide green, cobalt green, cobalt blue, iron blue, cadmium red, cadmium yellow, lithopone, carbon black, iron oxide red, iron oxide yellow, that is, the color developer may be any one of the materials listed above, or may be any two or combinations of two or more of the materials listed above. Furthermore, the color developer includes one or more of titanium chrome brown, titanium nickel yellow, bismuth vanadate, chromium oxide green, cobalt green, cobalt blue. For example, the color developer may be titanium chrome brown; or, the color developer may be bismuth vanadate; or the color developer may be a combination of cobalt green and cobalt blue, and so on. The color developer selected in the present disclosure has a chromaticity of 0 to 20 degrees in standard electrolyte. Furthermore, the color developer has a chromaticity of 2.5 degrees to 15 degrees in standard electrolyte. Even further, the color developer may have a chromaticity of 5 degrees, 10 degrees or 15 degrees, etc. in standard electrolyte.

It should be noted that the method for measuring the chromaticity of the color developer is as follows.

1. Prepare an experimental sample: The active material layer area of the electrode sheet is cut and placed in a transparent glass bottle. The standard electrolyte is added, ensuring the standard electrolyte completely submerges the electrode sheet (the mass ratio of electrolyte to electrode sheet is 95:5). The electrode sheet is sealed and stored for 3 days under conditions of 25°C and humidity ≤50%. Then the electrode sheet is retrieved.

2. Prepare a blank sample: The standard electrolyte is placed in another transparent glass bottle and sealed and stored for 3 days under conditions of 25°C and humidity ≤50%.

3. The standard platinum-cobalt colorimetric method is adopted to measure the chromaticity of the blank sample and the experimental sample. The chromaticity of the blank sample and the experimental sample is compared with the standard electrolyte separately. The color of the test sample that is closest to the standard electrolyte is recorded as the chromaticity value of the test sample. The final chromaticity of the color developer = chromaticity of the experimental sample - chromaticity of the blank sample.

The formulation of the above-mentioned standard electrolyte is as follows. Propylene ethyl carbonate (PEC), ethyl methyl carbonate (EMC), ethylene carbonate (EC), propylene carbonate (PC), and fluoroethylene carbonate (FEC) are mixed in a volume ratio of 40:20:25:5:10 to prepare an organic solvent. In a dry argon environment, a mixed lithium salt of lithium hexafluorophosphate ($LiPF_6$) and lithium difluoro(oxalato)borate (LiODFB) is added in a mass ratio of 97:3 to the organic solvent and stirred until completely dissolved, thus preparing an electrolyte using a lithium salt with a concentration of 1 mol/L.

The standard electrolyte used in the above test may be purchased directly or prepared by oneself: Chromaticity standard electrolyte: 500 Hazen; Colorimetric tube: 100ml; Preparation of various chromaticity standard electrolyte: Preparation of 2.5 Hazen standard electrolyte: A pipette is used to accurately measure 0.5ml of 500 Hazen chromaticity standard electrolyte into a 100ml volumetric flask, and the liquid is diluted to the mark with pure water, shaken well, then transferred to a 100ml colorimetric tube to the mark line. Preparation of 5 Hazen standard electrolyte: A pipette is used to accurately measure 1ml of 500 Hazen chromaticity standard electrolyte into a 100ml volumetric flask, and the liquid is diluted to the mark with pure water, shaken well, then transferred to a 100ml colorimetric tube to the mark line; and so on.

In some embodiments, the ceramic filler includes at least one of aluminum oxide, boehmite, titanium dioxide, zirconium dioxide, zinc oxide, barium sulfate, boron nitride, aluminum nitride, and magnesium nitride. However, the present disclosure is not limited to these materials, and other materials used as ceramic fillers in the active material layer of electrode sheets may also be used. The ceramic filler in the present disclosure may be selected from any one of the materials listed above, or may be selected from any combination of the materials listed above. Furthermore, the ceramic filler is selected from at least one of aluminum oxide, boehmite, titanium dioxide, and barium sulfate. For example, the ceramic filler is aluminum oxide, or boehmite, or a combination of titanium dioxide and barium sulfate. It should be noted that the ceramic filler includes but is not limited to the types of materials listed above. When the ceramic filler is a combination of multiple types of the materials, there is no restriction on the ratio between the materials, and they may be mixed in any proportion.

In some embodiments, the adhesive may include at least one of polyvinylidene fluoride (PVDF), polyimide, polyphenylene sulfide, polyarylsulfone, polyether chloride, polyacrylonitrile, polyvinyl alcohol, ethylene-acrylic acid copolymer (EAA), ethylene-vinyl acetate copolymer (EVA), ethylene-ethyl acrylate copolymer (EEA), and polyacrylic acid (PAA); that is, the adhesive may be selected from any one or combinations of any two or more of the types listed above. For example, the adhesive may be PVDF, or the adhesive may be polyimide, or the adhesive may be a combination of EAA and EEA mixed in any ratio. Furthermore, the adhesive may include at least one of PVDF, polyimide, polyacrylonitrile, EAA, EVA, and PAA. More specifically, the adhesive may be PVDF. The adhesive may also be selected from other types of adhesives not listed above.

The first active material layer 14 is prepared by uniformly dispersing the ceramic filler, the adhesive, and the color developer in an organic solvent such as N-methyl pyrrolidone (NMP), then coating the mixture on the current collector 11 for drying. Therefore, the ratio of the ceramic filler, the adhesive, and the color developer in the first active material layer 14 has an important effect on the color development and adhesion of the first active material layer 14. In some embodiments, based on the total mass of dry materials in the first active material layer 14, the mass content of the color developer in the first active material layer 14 is 2% to 20%, for example, 2%, 5%, 10%, 15%, or 20%, etc. Furthermore, the mass content of the color developer is 2.5% to 10%, optionally, the mass content of the color developer is 2.5%, 4%, 6%, or 8%, etc. If the content of the color developer in the first active material layer 14 is too low, the presented color is too light and difficult to distinguish; if the content of the color developer is too high, the static viscosity of the slurry is too high and difficult to coat. The mass content of the adhesive in the first active material layer 14 is 8% to 40%. Furthermore, in the first active material layer 14, the mass content of the adhesive is 10% to 35%; optionally, the mass content of the adhesive may be 15%, 20%, 30%, or 35%, etc. If the content of the adhesive in the first active material layer 14 is too low, the adhesion is insufficient and there may be partial shedding; if the content of the adhesive is too high, the first active material layer 14 may stick when die-cutting the current collector. The mass content of the ceramic filler in the first active material layer 14 is 55% to 88%, for example, 55%, 65%, 75%, 85%, or 88%, etc.

Since the main functions of the active material layer are firstly to insulate and prevent short circuits caused by contact between the positive electrode sheet and the negative electrode sheet during use, and secondly to reduce the generation of burrs during die-cutting of the electrode tabs. In the first active material layer of this application, by setting the proportion of the ceramic particles, the color developer, and adhesive within the above-mentioned range, it may not only possible to achieve the function of the active material layer itself but also display a non-white color, facilitating the distinction between the front and back sides of the electrode sheets.

The inventor also found in his research that the particle size ratio of the color developer to the ceramic filler in the active material layer may affect its color development. In an embodiment, the average particle size of the color developer is $d_1$, the average particle size of the ceramic filler is $d_2$, and $d_1$ and $d_2$ satisfy: $0.25 \leq d_1/d_2 \leq 6$, furthermore, $0.8 \leq d_1/d_2 \leq 4$, and even further, $d_1/d_2$ may be 1, or 2, or 3, or 4, etc. When the particle size ratio of the two is within the above range, the first active material layer 14 may present a distinct color.

It should be pointed out that the average particle size, i.e., D50, may be defined as the particle size corresponding to 50% in the cumulative volume-based particle size distribution curve; the average particle size may be measured by laser diffraction method. D50 is a well-known concept in the field and may be measured by instruments and methods known in the art. For example, D50 is determined according to the GB/T 19077.1-2016 standard, using a laser particle size analyzer (such as Malvern Master Size 3000). D50 is the particle size equivalent to 50% of the cumulative volume distribution of the substance.

Please refer to FIG. 4, in some embodiments, the second active material layer 15 may adopt a similar formulation to the first active material layer 14, i.e., including the ceramic filler, the adhesive, and the color developer. In this case, the color developer in the second active material layer 15 is different from the color developer in the first active material layer 14, so that the second active material layer 15 presents a different color from the first active material layer 14. For example, one may present yellow, and the other may present green, etc. In other embodiments, the second active material layer 15 may also adopt a conventional white ceramic coating, i.e., including ceramic filler and adhesive, without containing a color developer.

In some embodiments, the electrode tab may be formed by die-cutting the uncoated area of the current collector 11, or the electrode tab may be formed independent of the current collector 11 and then welded together with the current collector 11. The active material layer may be disposed between the active substance layer and the electrode tab, covering part of the current collector and/or the electrode tab. That is, the active material layer may only cover part of the electrode tab, or may cover a part of the current collector 11 and a part of the electrode tab. The active material layer covering the electrode tab may anchor the base of the electrode tab, preventing the electrode tab from breaking.

The positive electrode sheet and/or negative electrode sheet of the electrode assembly 130 may adopt the structure of the electrode sheet 10 provided by the present disclosure. That is, both the positive electrode sheet and the negative electrode sheet may adopt the structure of the aforementioned electrode sheet, or one of them may adopt the aforementioned structure, which may be set according to actual requirements. Furthermore, the positive electrode sheet may adopt the structure of the aforementioned electrode sheet 10, while the negative electrode sheet may adopt the structure of a conventional electrode sheet.

In some embodiments, the battery 100 may further include an electrolyte for transporting metal ions between the positive electrode sheet and the negative electrode sheet. The electrolyte may include an electrolyte salt and an organic solvent. As an example, the electrolyte salt may be a lithium salt, which may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluor-ophosphate ($LiPO_2F_2$), lithium difluoro bis(oxalato)phosphate (LiDFOP), and lithium tetrafluoro(oxalato)phosphate (LiTFOP). The organic solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB).

In some embodiments, additives may also be added to the electrolyte. For example, the electrolyte may include negative electrode film-forming additives, positive electrode film-forming additives, additives for improving battery overcharge performance, additives for improving high-temperature performance of battery, additives for improving low-temperature performance of battery, etc.

The process for preparing the aforementioned battery may be exemplified as follows:

(1) Preparation of the positive electrode sheet

The positive electrode active material, the conductive agent, and the binder are mixed in a specific ratio, and a solvent (e.g., N-methyl pyrrolidone, abbreviated as NMP) is added thereto, then thoroughly stirred and mixed to form a uniform positive electrode slurry. The positive electrode slurry is coated on the positive electrode current collector, and after processes such as drying and cold pressing, the positive electrode sheet is obtained. Then, active material layers are coated on both sides of the active substance layer (according to the design, a color-developing ceramic coating is applied on one side, and a conventional white ceramic coating is applied on the other side) to produce the required electrode sheet. The proportion of the ingredients in the positive electrode slurry may be set according to conventional proportions, which is not limited herein.

(2) Preparation of the negative electrode sheet

The negative electrode active material, the binder, the thickener, and the conductive agent are mixed in proportion, then deionized water is added thereto, and thoroughly stirred and mixed to form a uniform negative electrode slurry. The negative electrode slurry is coated on the negative electrode current collector, and after processes such as drying and cold pressing, the negative electrode sheet is obtained. The proportion of the ingredients in the negative electrode slurry may be set according to conventional proportion, which is not limited herein.

(3) Separator

The separator may be selected from any known porous structure separator with good chemical stability and mechanical stability. As an example, the material of the separator may be selected from polyethylene (PE) film, polypropylene (PP) film, polyvinylidene fluoride film, and one or more of multilayer composite films containing one or two or more of the materials mentioned above. The separator may be a single-layer separator or a multi-layer composite separator, without any particular limitation. When the separator is a multi-layer composite separator, the materials of each layer may be the same or different, without any particular limitation.

(4) Preparation of the electrolyte

In an argon atmosphere glove box with a water content of <10ppm, the solvents are mixed uniformly in a specific ratio to prepare the organic solvent. The electrolyte salt is added to the organic solvent and mixed by stirring to prepare the electrolyte with the required concentration.

(5) Battery assembly

The prepared positive electrode sheet, the separator, and the negative electrode sheet are placed in sequence, with the separator positioned between the positive and negative electrode sheets to serve the isolation function. The electrode assembly may be obtained through winding or stacking the positive electrode sheet, the separator, and the negative electrode sheet. The electrode assembly is placed into the housing, dried, and then injected with the electrolyte. After processes such as sealing, resting, and formation, the battery is obtained.

The electrode assembly in the battery of the present disclosure adopts the electrode sheets described above. Since the active material layers on both sides of the electrode sheet present different colors, the front and back sides of the electrode sheet may be effectively distinguished based on the color. Moreover, as the color developer in the active material layer uses inorganic materials, the color developer has good chemical stability and does not react chemically with the electrolyte of the battery, thus not affecting the performance of the battery.

The technical solution of the present disclosure may be explained in detail through several specific Examples and comparative examples below. Unless otherwise stated, the raw materials and reagents used in the following Examples are commercially available products, or may be prepared through conventional methods in the field, and the instruments used in the Examples may be commercially obtained.

Example 1

This Example provides an electrode sheet, which is a positive electrode sheet. The positive electrode sheet includes a current collector, a first active substance layer, a second active substance layer, a first active material layer and a second active material layer. The current collector is an aluminum foil current collector. The first active substance layer and the second active substance layer are respectively disposed on the first surface and the second surface of the aluminum foil current collector along the thickness direction thereof, wherein the first surface and the second surface are opposite to each other. The first active material layer is disposed on the first surface and partially overlap with the first active substance layer. The second active material layer is disposed on the second surface and partially overlap with the second active substance layer. The first active material layer includes the ceramic filler, the adhesive and the color developer, while the second active material layer is a ceramic coating without added color developer.

In this Example, the first active material layer includes boehmite (ceramic filler), PVDF (adhesive, molecular weight 0.9 million to 1.1 million) and bismuth vanadate (color developer). In the first active material layer, the mass content of PVDF is 18%, the mass content of bismuth vanadate is 2.5%, and the remainder is boehmite. The average particle size of boehmite is $1.6\mu m$, and the particle size ratio of bismuth vanadate to boehmite is 2.3.

The configuration method is as follows: First, boehmite and bismuth vanadate are premixed at a speed of 1500 rpm/min for 30 min; then the adhesive PVDF is added and dispersed at a speed of 2000 rpm/min for 90 min, followed by the addition of the solvent NMP to prepare a ceramic slurry with 30% solid content.

The specific preparation process of the electrode sheet is as follows: The positive electrode active material NCM811 ($LiNi_{0.8}Co_{0.1}Mn_{0.1}O_2$), the conductive agent Super P, and the binder polyvinylidene fluoride (PVDF) are mixed uniformly according to the weight ratio of 96.5:1.5:2, then the solvent N-methyl pyrrolidone (NMP) is added and thoroughly stirred to reach a uniform state to prepare the positive electrode slurry.

The positive electrode slurry is coated on the first surface and the second surface of the aluminum foil current collector respectively, and dried to obtain the first active substance layer and the second active substance layer.

The ceramic slurry prepared above is coated on the first surface on one side of the first active substance layer, and the ceramic slurry without added color developer is coated on the second surface on one side of the second active substance layer. After drying, cold pressing, cutting and other processes, the positive electrode sheet is obtained.

This Example further provides a battery, which includes a positive electrode sheet, a negative electrode sheet, a separator and an electrolyte, wherein the positive electrode sheet is the positive electrode sheet prepared as described above.

Negative electrode sheet: The artificial graphite used as the negative electrode material, acetylene black used as the conductive agent, CMC used as the thickener, and SBR used as the binder are mixed according to the mass ratio of 96.4:1:1.2:1.4, then the solvent deionized water is added and thoroughly stirred to obtain the negative electrode slurry. The negative electrode slurry is uniformly coated on the negative electrode current collector copper foil, and after drying, cold pressing, cutting and other processes, the negative electrode sheet is obtained.

Separator: A porous film of PE with a thickness of $11\mu m$.

Electrolyte: In an argon atmosphere glove box with a water content of <10ppm, PEC, EMC, EC, PC and FEC are mixed uniformly according to the volume ratio of 40:20:25:5:10 to prepare the organic solvent. $LiPF_6$ and LiODFB are mixed as combined lithium salts in a mass ratio of 97:3 and added to the organic solvent, and the mixture is stirred to prepare an electrolyte using a lithium salt with a concentration of 1 mol/L.

The positive electrode sheet, the separator, and the negative electrode sheet are stacked in sequence and wound into shape, then wrapped with aluminum-plastic film, dried and injected with electrolyte. After packaging, standing, formation and other processes, a pouch battery (i.e., lithium-ion secondary battery) with a capacity of 46 Ah is finally obtained.

Example 2

The difference between this Example and Example 1 is that the content of color developer in the first active material layer is 5%, with the rest being the same.

Example 3

The difference between this Example and Example 1 is that the content of color developer in the first active material layer is 10%, with the rest being the same.

Example 4

The difference between this Example and Example 1 is that the content of color developer in the first active material layer is 20%, with the rest being the same.

Example 5

The difference between this Example and Example 1 is that the content of adhesive in the first active material layer is 8%, with the rest being the same.

Example 6

The difference between this Example and Example 5 is that the content of adhesive in the first active material layer is 11%, with the rest being the same.

Example 7

The difference between this Example and Example 1 is that the content of adhesive in the first active material layer is 35%, with the rest being the same.

Example 8

The difference between this Example and Example 1 is that the content of adhesive in the first active material layer is 40%, with the rest being the same.

Example 9

The difference between this Example and Example 2 is that cobalt blue is used as the color developer in the first active material layer, with the rest being the same.

Example 10

The difference between this Example and Example 2 is that cobalt green is used as the color developer in the first active material layer, with the rest being the same.

Example 11

The difference between this Example and Example 2 is that bismuth vanadate + cobalt green are used as the color developer in the first active material layer, and the content of bismuth vanadate and cobalt green are 3% + 3%, with the rest being the same.

Example 12

The difference between this Example and Example 2 is that the molecular weight of PVDF used as the adhesive in the first active material layer is 1.3 million to 1.7 million.

Example 13

The difference between this Example and Example 2 is that the adhesive in the first active material layer is polyimide, and the molecular weight of the polyimide is 0.7 million to 1.2 million.

Example 14

The difference between this Example and Example 2 is that the adhesive in the first active material layer is a compound of polyimide and EAA, and the molecular weight is 0.05 million to 0.4 million.

Example 15

The difference between this Example and Example 2 is that the molecular weight of the adhesive in the first active material layer is 0.8 million to 1.2 million.

Example 16

The difference between this Example and Example 15 is that the ceramic filler in the first active material layer is aluminum oxide.

Example 17

The difference between this Example and Example 15 is that the particle size of the ceramic filler in the first active material layer is 0.3$\mu$m.

Example 18

The difference between this Example and Example 15 is that the particle size of the ceramic filler in the first active material layer is 4$\mu$m.

Example 19

The difference between this Example and Example 2 is that in the first active material layer, the particle size ratio of the color developer to the ceramic filler is 0.25, the particle size of the ceramic filler is 4$\mu$m, the molecular weight of the adhesive is 0.8 million to 1.2 million, and the mass content of bismuth vanadate is 3%.

Example 20

The difference between this Example and Example 19 is that in the first active material layer, the particle size ratio of the color developer to the ceramic filler is 0.8.

Example 21

The difference between this Example and Example 19 is that in the first active material layer, the particle size ratio of the color developer to the ceramic filler is 1.3.

Example 22

The difference between this Example and Example 19 is that in the first active material layer, the particle size ratio of the color developer to the ceramic filler is 4.

Example 23

The difference between this Example and Example 19 is that in the first active material layer, the particle size ratio of the color developer to the ceramic filler is 6.

Comparative Example 1

The difference between this comparative example and Example 1 is that no color developer is added to the first active material layer.

Comparative Example 2

The difference between this comparative example and Example 1 is that the mass content of the color developer in the first active material layer is 1%.

Table 1: Formulations of color-developing ceramic coatings for Examples 1 to 23 and Comparative Examples 1 to 2.

| Item | | Ceramic filler | Particle size ratio of color developer to ceramic filler | Particle size of ceramic /μm | Adhesive | Adhesive molecular weight | Adhesive content | Types of color developers | Color developer content |
|---|---|---|---|---|---|---|---|---|---|
| | Comparative Example 1 | boehmite | 2.3 | 1.6 | PVDF | 900,000 to 1,100,000 | 18% | none | 0 |
| Color developer content | Comparative Example 2 | boehmite | 2.3 | 1.6 | PVDF | 900,000 to 1,100,000 | 18% | bismuth vanadate | 1.0% |
| | Example 1 | boehmite | 2.3 | 1.6 | PVDF | 900,000 to 1,100,000 | 18% | bismuth vanadate | 2.5% |
| | Example 2 | boehmite | 2.3 | 1.6 | PVDF | 900,000 to 1,100,000 | 18% | bismuth vanadate | 5.0% |
| | Example 3 | boehmite | 2.3 | 1.6 | PVDF | 900,000 to 1,100,000 | 18% | bismuth vanadate | 10.0% |
| | Example 4 | boehmite | 2.3 | 1.6 | PVDF | 900,000 to 1,100,000 | 18% | bismuth vanadate | 20.0% |
| PVDF content | Example 5 | boehmite | 2.3 | 1.6 | PVDF | 900,000 to 1,100,000 | 8% | bismuth vanadate | 2.0% |
| | Example 6 | boehmite | 2.3 | 1.6 | PVDF | 900,000 to 1,100,000 | 11% | bismuth vanadate | 2.5% |
| | Example 1 | boehmite | 2.3 | 1.6 | PVDF | 900,000 to 1,100,000 | 18% | bismuth vanadate | 2.5% |
| | Example 7 | boehmite | 2.3 | 1.6 | PVDF | 900,000 to 1,100,000 | 35% | bismuth vanadate | 2.5% |
| | Example 8 | boehmite | 2.3 | 1.6 | PVDF | 900,000 to 1,100,000 | 40% | bismuth vanadate | 2.5% |
| Types of color developers | Example 9 | boehmite | 2.3 | 1.6 | PVDF | 900,000 to 1,100,000 | 18% | cobalt blue | 5.0% |
| | Example 10 | boehmite | 2.3 | 1.6 | PVDF | 900,000 to 1,100,000 | 18% | cobalt green | 5.0% |
| | Example 11 | boehmite | 2.3 | 1.6 | PVDF | 900,000 to 1,100,000 | 18% | bismuth vanadate + cobalt blue | 3%+3% |

| Item | | Ceramic filler | Particle size ratio of color developer to ceramic filler | Particle size of ceramic /μm | Adhesive | Adhesive molecular weight | Adhesive content | Types of color developers | Color developer content |
|---|---|---|---|---|---|---|---|---|---|
| Types and molecular weight of adhesive | Example 2 | boehmite | 2.3 | 1.6 | PVDF | 900,000 to 1,100,000 | 18% | bismuth vana-date | 5.0% |
| | Example 12 | boehmite | 2.3 | 1.6 | PVDF | 1.3 to 1.7 million | 18% | bismuth vanadate | 5.0% |
| | Example 13 | boehmite | 2.3 | 1.6 | polyimide | 700,000 to 1,200,000 | 18% | bismuth vanadate | 5.0% |
| | Example 14 | boehmite | 2.3 | 1.6 | polyimide +EAA | 50,000 to 400,000 | 18% | bismuth vanadate | 5.0% |
| Types and particle sizes of ceramic | Example 15 | boehmite | 2.3 | 1.6 | PVDF | 800,000 to 1,200,000 | 18% | bismuth vanadate | 5.0% |
| | Example 16 | aluminum oxide | 2.3 | 1.6 | PVDF | 800,000 to 1,200,000 | 18% | bismuth vanadate | 5.0% |
| | Example 17 | boehmite | 2.3 | 0.3 | PVDF | 800,000 to 1,200,000 | 22% | bismuth vanadate | 5.0% |
| | Example 18 | boehmite | 2.3 | 4 | PVDF | 800,000 to 1,200,000 | 18% | bismuth vanadate | 5.0% |
| Particle size ratio of color developer to ceramic | Example 19 | boehmite | 0.25 | 4 | PVDF | 800,000 to 1,200,000 | 18% | bismuth vanadate | 3.0% |
| | Example 20 | boehmite | 0.8 | 4 | PVDF | 800,000 to 1,200,000 | 18% | bismuth vanadate | 3.0% |
| | Example 21 | boehmite | 1.3 | 4 | PVDF | 800,000 to 1,200,000 | 18% | bismuth vanadate | 3.0% |
| | Example 22 | boehmite | 4 | 4 | PVDF | 800,000 to 1,200,000 | 18% | bismuth vanadate | 3.0% |
| | Example 23 | boehmite | 6 | 4 | PVDF | 800,000 to 1,200,000 | 18% | bismuth vana-date | 3.0% |

EP 4 621 864 A1

5g of the positive electrode sheets prepared in Examples 1 to 23 and Comparative Examples 1 to 2 were cut in the active material layer area, placed in 95g of standard electrolyte, and sealed and stored for 3 days at 25°C and humidity ≤50% to observe the state of the active material layer area of the electrode sheets. The chromaticity was also tested, with the specific testing process referring to the above description. The test results may be seen in Table 2.

Table 2: Test results of positive electrode sheets for Examples 1 to 23 and Comparative Examples 1 to 2

| Item | | Color of the first active material layer | Chromaticity of color developer | Peel strength after soaking in electrolyte for 3 days | Note |
|---|---|---|---|---|---|
| Comparative Example | Comparative Example 1 | white | 0 | no shedding | |
| Color developer content | Comparative Example 2 | white | 2.5 | no shedding | |
| | Example 1 | light yellow | 2.5 | no shedding | |
| | Example 2 | yellow | 5 | no shedding | |
| | Example 3 | deep yellow | 10 | no shedding | |
| | Example 4 | deep yellow | 15 | no shedding | The slurry has a relatively high static viscosity, making it difficult to coat |
| PVDF content | Example 5 | light yellow | 2.5 | partially peeling off | |
| | Example 6 | light yellow | 2.5 | no shedding | |
| | Example 1 | light yellow | 2.5 | no shedding | |
| | Example 7 | light yellow | 2.5 | no shedding | |
| | Example 8 | light yellow | 2.5 | no shedding | Adhesion of active material layer during laser die cutting |
| Types of color developers | Example 9 | yellow | 7.5 | no shedding | |
| | Example 10 | yellow | 7.5 | no shedding | |
| | Example 11 | grayish green | 7.5 | no shedding | |
| Types and molecular weight of adhesive | Example 2 | yellow | 5 | no shedding | |
| | Example 12 | yellow | 5 | no shedding | |
| | Example 13 | yellow | 5 | no shedding | |
| | Example 14 | yellow | 5 | no shedding | |
| Types and particle sizes of ceramic | Example 15 | yellow | 5 | no shedding | |
| | Example 16 | yellow | 5 | no shedding | |
| | Example 17 | yellow | 5 | no shedding | |
| | Example 18 | yellow | 5 | no shedding | |
| Particle size ratio of color developer to ceramic filler | Example 19 | off to white | 5 | no shedding | Insufficient color differentiation |
| | Example 20 | off to white | 5 | no shedding | Insufficient color differentiation |
| | Example 21 | light yellow | 5 | no shedding | |
| | Example 22 | yellow | 5 | no shedding | |
| | Example 23 | deep yellow | 5 | no shedding | |

From Table 1 and Table 2, it may be concluded that: (1) Comparing Examples 1 to 4 and Comparative Examples 1 to 2, under the same other conditions, as the content of color developer in the first active material layer increases, the color presented by the first active material layer gradually deepens, making it easier to distinguish between the first active material layer and the second active material layer of the positive electrode sheet. In Comparative Example 1, no color developer was added, and the color presented was white, therefore the active material layers on both sides of the positive electrode sheet in Comparative Example 1 were the same color and could not be distinguished. Although color developer was added in Comparative Example 2, due to the low content of color developer, the color change was not obvious and still appeared white, making it impossible to distinguish between the two sides of the electrode sheet. In Example 4, the content of color developer was relatively high, and although the color was deeper and could distinguish between the front and back of the electrode sheet, the high content of color developer resulted in a high static viscosity of the slurry, making it difficult to coat. Therefore, keeping the content of color developer in the active material layer within an appropriate ratio range can both present a non-white color and facilitate coating. At the same time, because one side of the active material layer (without color developer) is white and the other side is colored, having one side white may facilitate CCD recognition of the active material layer and active substance layer, as the active substance layer is black, and this black and white contrast is easier to recognize. Therefore, it may be preferable for one side of the active material layer to have color and the other side to be white.

From the chromaticity values of Examples 1 to 4 and Comparative Examples 1 to 2, it may also be concluded that: as the content of color developer increases, its solubility in the electrolyte increases, and the corresponding chromaticity value increases accordingly. It should be noted that: due to the chromaticity comparison scale interval being 2.5, i.e., the scale values are in sequence: 0, 2.5, 5, 7.5, 10, 12.5, 15........, the chromaticity values in the testing process are all taken as multiples of 2.5, meaning the chromaticity is defined as the value closest to which scale it approaches.

(2) Comparing Example 1 and Examples 5 to 8, it may be concluded that: the content of adhesive in the active material layer does not affect the color of the coating, but it does affect the adhesion between the coating and the current collector. Under the same other conditions, as the content of adhesive in the active material layer increases, the adhesion between the coating and the current collector gradually increases. When the content of adhesive in the active material layer is lower than 10%, the coating partially peels off after soaking in the electrolyte for 15 days. When the content of adhesive in the active material layer is higher than 35%, due to the strong adhesion between the coating and the current collector, the electrode sheets might stick together during laser cutting. Therefore, the preferred content of adhesive in the active material layer ranges from 10% to 35%.

(3) Comparing Examples 9 to 11, it may be concluded that: different types of color developers used in the active material layer can all present non-white colors, and when used in the active material layer of electrode sheets, the front and back sides of electrode sheets may be effectively distinguished.

(4) Comparing Examples 12 to 14, it may be concluded that: the type and molecular weight of the adhesive do not affect the color presented by the active material layer.

(5) Comparing Examples 15 to 18, it may be concluded that: different types of ceramic fillers and ceramic fillers with different particle sizes used in the active material layer can all present non-white colors, and when used in the active material layer of electrode sheets, the front and back sides of the electrode sheets may be effectively distinguished.

(6) Comparing Examples 19 to 23, it may be concluded that: the particle size ratio of the color developer to the ceramic filler may affect the color presented by the active material layer. Under the same other conditions, the larger the particle size ratio of the color developer to the ceramic filler, the darker the color presented by the active material layer, which may be more favorable for distinguishing between the front and back sides of the electrode sheets.

The present disclosure sets active material layers of different colors at one end near the electrode tab on both sides of the active substance layer of the electrode sheet. By observing the color of the active material layer, the front and back sides of the electrode sheets may be effectively distinguished. In addition, inorganic materials are added as color developers to at least one of the active material layers on both sides of the electrode sheet, which have strong compatibility and high stability. This can make the active material layers on both sides present different colors while maintaining chemical stability and insolubility in the electrolyte, thus not affecting the battery performance. Therefore, the present disclosure effectively overcomes some practical problems in the existing technology, thus having high utilization value and practical significance. The first active material layer 14 is located on one side of the electrode sheet 10 facing the center hole of the electrode assembly 130 (that is, the center position of the electrode assembly 130, or the center of the electrode assembly 130 if it is a cylindrical battery). This can make the outer side of the electrode sheet 10 of the electrode assembly 130 have a white active material layer, so it is convenient for CCD to recognize the distance of the electrode sheet 10, that is, the distance by which the first active material layer 14 exceeds the active substance layer of the negative electrode sheet. This avoids the risk of contact short circuit caused by the first active material layer 14 being too close to the negative active substance layer, thus improving the safety of the battery.

The above implementation examples are only illustrative explanations of the principles and effects of the present disclosure, and are not intended to limit the present disclosure. Any person skilled in this technology may modify or change the above implementation examples without departing from the spirit and scope of the present disclosure. Therefore, all equivalent modifications or changes completed by those with ordinary knowledge in the relevant technical field without departing from the spirit and technical concept disclosed by the present disclosure should still be covered by claims of the present disclosure.

**Claims**

1. An electrode sheet (10), comprising:

    a current collector (11), having a first surface and a second surface opposite to each other;
    an electrode tab, protruding from the current collector (11);
    an active substance layer, disposed on the first surface and the second surface;
    an active material layer, at least partially overlapping with or having a gap from one end of the active substance layer near the electrode tab, wherein the active material layer comprises a first active material layer (14) disposed on the first surface and a second active material layer (15) disposed on the second surface;
    wherein colors of the first active material layer (14) and the second active material layer (15) are different.

2. The electrode sheet (10) according to claim 1, wherein a distance between the active material layer and one end of the active substance layer is h, where a value of h ranges from 0mm to 1mm.

3. The electrode sheet (10) according to claim 1, wherein the different colors of the first active material layer (14) and the second active material layer (15) facilitate visual identification of proper installation orientation of the electrode sheet (10).

4. The electrode sheet (10) according to claim 1, wherein the active material layer covers a part of the current collector (11) and/or the electrode tab, wherein the electrode sheet (10) is a positive electrode sheet.

5. The electrode sheet (10) according to claim 1, wherein the first active material layer (14) comprises: a ceramic filler, an adhesive, and a color developer, wherein the color developer is an inorganic material.

6. The electrode sheet (10) according to claim 4, wherein in the first active material layer (14), a mass content of the color developer is 2% to 20%, a mass content of the adhesive is 8% to 40%, and a mass content of the ceramic filler is 55% to 88%.

7. The electrode sheet (10) according to claim 5, wherein in the first active material layer (14), the mass content of the color developer is 2.5% to 10%, and the mass content of the adhesive is 10% to 35%.

8. The electrode sheet (10) according to claim 4, wherein the color developer comprises at least one of titanium chrome brown, titanium nickel yellow, bismuth vanadate, chromium oxide green, cobalt green, cobalt blue, iron blue, cadmium red, cadmium yellow, lithopone, carbon black, iron oxide red, and iron oxide yellow;

    the adhesive comprises at least one of polyvinylidene fluoride, polyimide, polyphenylene sulfide, polyarylsulfone, polychloroether, polyacrylonitrile, polyvinyl alcohol, ethylene-acrylic acid copolymer, ethylene-vinyl acetate copolymer, ethylene-ethyl acrylate copolymer, and polyacrylic acid; and
    the ceramic filler comprises at least one of aluminum oxide, boehmite, titanium dioxide, zirconium dioxide, zinc oxide, barium sulfate, boron nitride, aluminum nitride, and magnesium nitride.

9. The electrode sheet (10) according to claim 4, wherein an average particle size of the color developer is d1, an average particle size of the ceramic filler is d2, and the d1 and the d2 satisfy: $0.25 \leq d1/d2 \leq 6$.

10. The electrode sheet (10) according to claim 8, wherein the d1 and the d2 satisfy: $0.8 \leq d1/d2 \leq 4$.

11. The electrode sheet (10) according to claim 4, wherein a chromaticity of the color developer in a standard electrolyte is 0 to 20 degrees; wherein the standard electrolyte comprises an organic solvent and lithium salt, the organic solvent comprises ethyl propyl carbonate, ethyl methyl carbonate, ethylene carbonate, propylene carbonate, and fluoroethylene carbonate with a volume ratio of 40:20:25:5:10, the lithium salt is a mixed lithium salt of lithium hexafluorophosphate and lithium difluoro(oxalato)borate with a mass ratio of 97:3, and a concentration of the lithium salt in the electrolyte is 1mol/L.

12. A battery (100), comprising an electrode assembly (130), wherein the electrode assembly (130) comprises a positive electrode sheet, a negative electrode sheet, and a separator disposed between the positive electrode sheet and the negative electrode sheet, wherein at least one of the positive electrode sheet and the negative electrode sheet adopts the electrode sheet (10) according to claim 1, and the first active material layer (14) is located on one side of the electrode sheet (10) facing a center hole of the electrode assembly (130).

13. The battery (100) according to claim 12, further comprising:

a housing (110), wherein one side of the housing (110) has an opening to accommodate the electrode assembly (130), and the housing (110) comprises an end wall (111) and a sidewall (112) surrounding the end wall (111);
an electrode terminal (113), wherein the electrode terminal (113) passes through the end wall (111); and
a cover plate (120), wherein the cover plate (120) covers the opening.

14. The battery (100) according to claim 13, wherein the battery (100) is a cylindrical battery.

15. An electronic device (1000), comprising the battery (100) according to any one of claims 12 to 14.

FIG. 1

FIG. 2

FIG. 3

FIG. 4

Europäisches
Patentamt

European
Patent Office

Office européen
des brevets

# EUROPEAN SEARCH REPORT

**Application Number**

EP 25 16 3437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 270 593 A1 (LG ENERGY SOLUTION LTD [KR]) 1 November 2023 (2023-11-01) * paragraphs [0007] - [0020]; figure 1 * ----- | 1-15 | INV. H01M4/13 H01M10/058 |
| A | JP 7 443317 B2 (PRIME PLANET ENERGY & SOLUTIONS INC) 5 March 2024 (2024-03-05) * paragraphs [0029] - [0050]; figures 1,3 * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 12 August 2025 | Spingler, Franz |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 3437

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2025

| Patent document cited in search report | | Publication date | Patent family member(s) | | Publication date |
|---|---|---|---|---|---|
| EP 4270593 | A1 | 01-11-2023 | CN | 116745966 A | 12-09-2023 |
| | | | EP | 4270593 A1 | 01-11-2023 |
| | | | JP | 7640178 B2 | 05-03-2025 |
| | | | JP | 2024504177 A | 30-01-2024 |
| | | | KR | 20230076111 A | 31-05-2023 |
| | | | US | 2024105954 A1 | 28-03-2024 |
| | | | WO | 2023096322 A1 | 01-06-2023 |
| JP 7443317 | B2 | 05-03-2024 | JP | 7443317 B2 | 05-03-2024 |
| | | | JP | 2023066189 A | 15-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1907712016 T